# EUROPEAN PATENT APPLICATION

(11) **EP 3 267 509 A1**
(43) Date of publication of application: **10.01.2018**
(21) Application number: 16758849.0
(22) Date of filing: 26.02.2016
(51) Int. Cl.: H01M 2/10, H01G 2/04, H01G 9/28, H01G 11/10, H01M 10/48

(54) **BATTERY PACK**

(30) Priority: 03.03.2015 JP 2015040915
(71) Applicant: AutoNetworks Technologies, Ltd., Yokkaichi-shi, Mie 510-8503 (JP); Sumitomo Wiring Systems, Ltd., Yokkaichi-shi, Mie 510-8503 (JP); Sumitomo Electric Industries, Ltd., Osaka-shi, Osaka 541-0041 (JP)
(72) Inventor: KUBOKI Hideyuki, Yokkaichi-shi Mie 510-8503 (JP); HIRAI Hiroki, Yokkaichi-shi Mie 510-8503 (JP); HIGASHIKOZONO Makoto, Yokkaichi-shi Mie 510-8503 (JP); NAKAGAWA Kenji, Yokkaichi-shi Mie 510-8503 (JP)
(74) Representative: Takeuchi, Maya
(86) International application number: PCT/JP2016/055758
(87) International publication number: WO 2016/140155

(57) **Abstract**

An electricity storage pack (10) includes a base member (60), a connector (80) that is fixed to the base member (60) and includes a first fitting portion (81) and a second fitting portion (84), an electric wire (71) that electrically connects the first fitting portion (81) and the second fitting portion (84), an electricity storage module (12) that includes an electricity storage-side fitting portion (30) fitted to the first fitting portion (81), and a control unit (40) that includes a control-side fitting portion (42) fitted to the second fitting portion (84).

## Description

### Technical Field

The present invention relates to an electricity storage pack.

### Background Art

Conventional techniques for connecting an electricity storage module to a unit for controlling the state of the electricity storage module are known. Patent Document 1 discloses an assembled battery including a plurality of modules in which a plurality of single cells are layered, and a battery management unit, the modules being connected to the battery management unit via electric wires.

### Citation List

### Patent Documents

Patent Document 1: JP 2013-125612A

### Summary of Invention

### Technical Problem

There is a problem in that, when the modules are connected to the battery management unit via the electric wires, there are some cases where the wiring routes of the electric wires become complicated due to the positional relationship between the modules and the battery management unit, and thus the configuration of the assembled battery becomes complicated.

The present invention was accomplished based on the above-mentioned circumstances, and it is an object thereof to simplify the configuration of an electricity storage pack.

### Solution to Problem

An electricity storage pack of the present invention includes a base member, a connector that is fixed to the base member and includes a first fitting portion and a second fitting portion, a conductive path that electrically connects a terminal of the first fitting portion and a terminal of the second fitting portion, an electricity storage module that includes an electricity storage-side fitting portion fitted to the first fitting portion, and a control unit that includes a control-side fitting portion fitted to the second fitting portion.

With this configuration, regarding the electrical connection between the electricity storage module and the control unit, the terminal of the first fitting portion of the connector and the terminal of the second fitting portion thereof are connected via the conductive path, and therefore, the electricity storage module and the control unit can be electrically connected by fitting the electricity storage-side fitting portion to the first fitting portion and fitting the control-side fitting portion to the second fitting portion. This makes it possible to arrange the electricity storage-side fitting portion and the control-side fitting portion collectively, and therefore, the wiring route of the conductive path between the electricity storage module and the control unit can be shortened, thus making it possible to simplify the configuration of the electricity storage pack.

It is preferable that embodiments of the present invention have the following aspects.
- The conductive path is an electric wire arranged on the base member.

With this configuration, the degree of freedom of the conductive path route can be increased.
- The base member includes a holding portion for holding the electric wire.

With this configuration, the positional shift of the electric wire can be suppressed.
- The electricity storage pack further includes an electric current detecting portion that outputs a signal in accordance with an electric current outputted by the electricity storage module, wherein the conductive path connects the electric current detecting portion and the terminal of the second fitting portion.

With this configuration, the control unit can detect an electric current outputted from the electricity storage module.
- The electricity storage pack further includes a relay unit that includes a relay for turning outputs of the electricity storage module on or off, wherein the connector includes a third fitting portion having a terminal that is electrically connected to at least one of the terminal of the first fitting portion and the terminal of the second fitting portion, and the relay unit includes a relay-side fitting portion fitted to the third fitting portion.

With this configuration, the electricity storage-side fitting portion, the control-side fitting portion, and the relay-side fitting portion can be gathered on the connector side, and therefore, the route of the conductive path between the electricity storage module, the control unit, and the relay unit can be shortened compared with a case where the electricity storage module, the control unit, and the relay unit are connected via a conductive path without using a connector, thus making it possible to simplify the configuration of the electricity storage pack.

### Advantageous Effects of Invention

With the present invention, the configuration of an electricity storage pack can be simplified.

### Brief Description of Drawings

FIG. 1 is a right side view of an electricity storage pack of an embodiment.
FIG. 2 is a perspective view of the electricity storage pack in a state in which a cover is removed.
FIG. 3 is a front view of the electricity storage pack in the state in which the cover is removed.
FIG. 4 is a plan view of the electricity storage pack in the state in which the cover is removed.
FIG. 5 is a cross-sectional view taken along line A-A in FIG. 4.
FIG. 6 is an enlarged view of a portion surrounded by a dashed-dotted line in FIG. 5.
FIG. 7 is a cross-sectional view taken along line B-B in FIG. 4.
FIG. 8 is an enlarged view of a portion surrounded by a dashed-dotted line in FIG. 7.
FIG. 9 is a perspective view of an electricity storage module.
FIG. 10 is a perspective view of an electricity storage-side fitting portion provided on a lower case.
FIG. 11 is a plan view showing a state in which electric wires are arranged on a base member.
FIG. 12 is a perspective view showing a state in which a connector is attached to the base member.
FIG. 13 is a front view showing a state in which the connector is attached to the base member.
FIG. 14 is a plan view showing a state in which the connector is attached to the base member.
FIG. 15 is a perspective view showing a state in which a control unit and a relay unit have been attached from the state shown in FIG. 12.

FIG. 16 is a plan view showing the state shown in FIG. 15.

### Description of Embodiments

### Embodiment 1

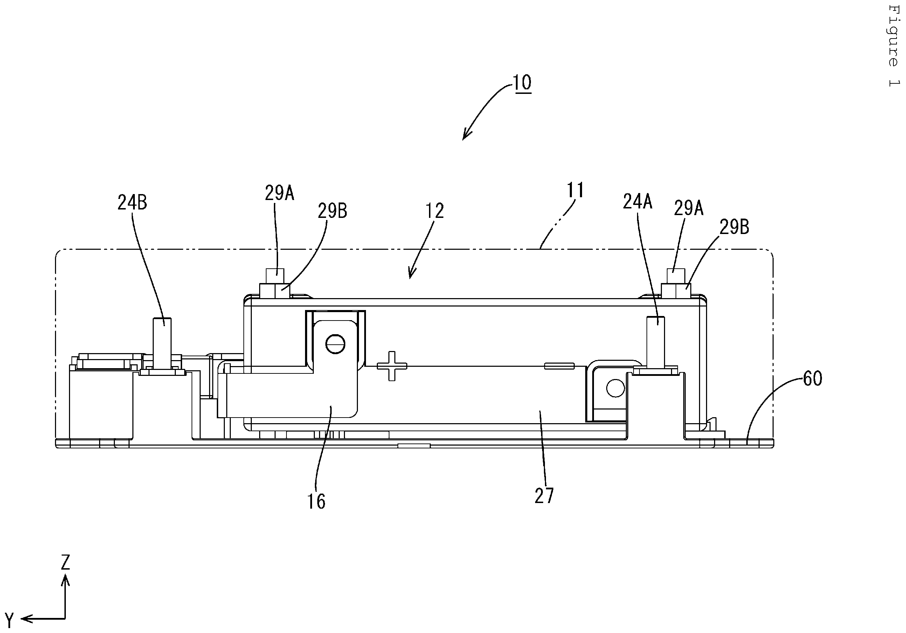

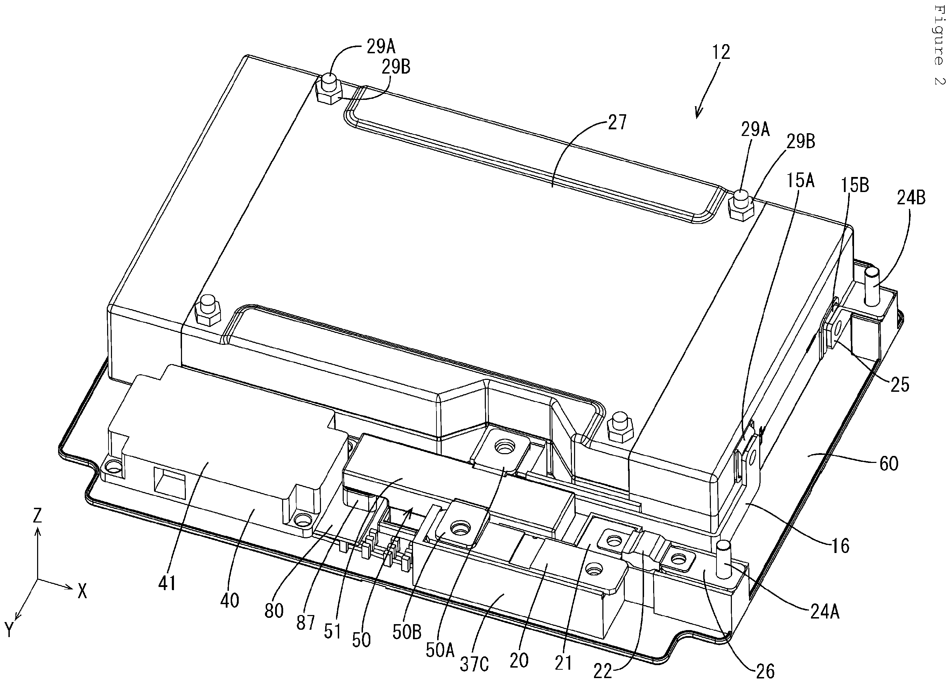

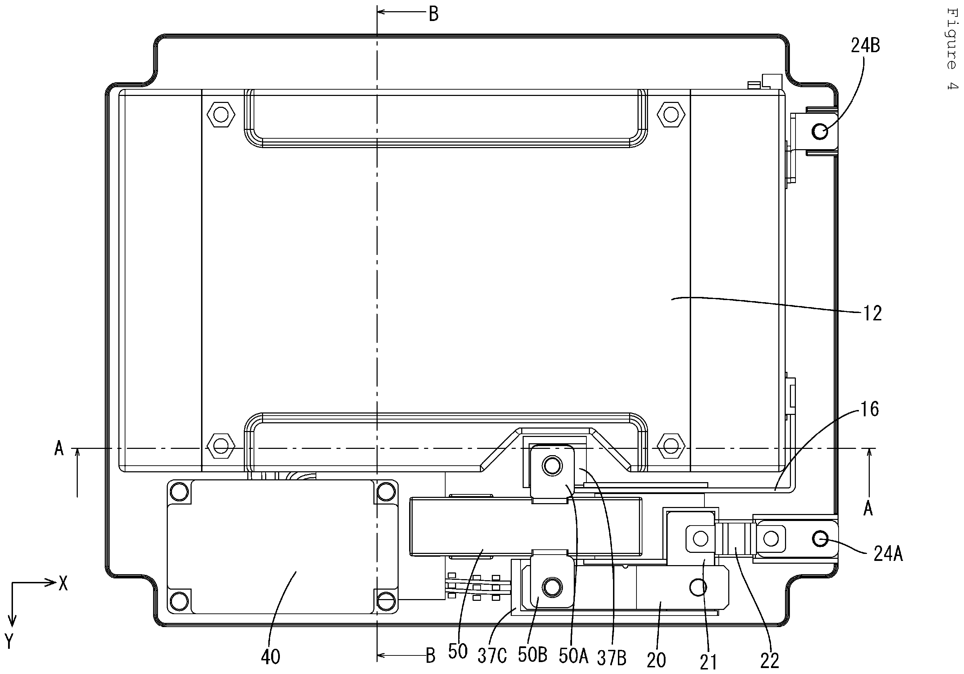

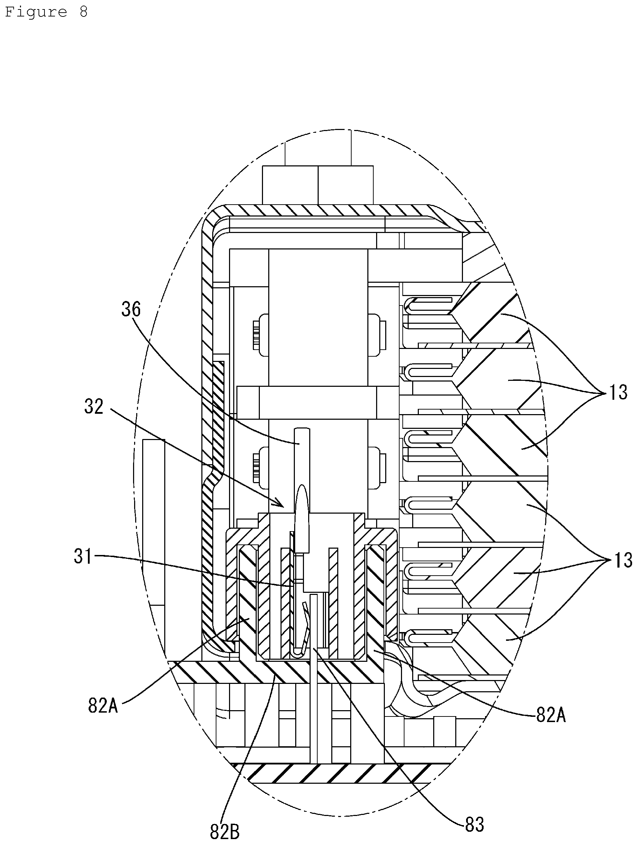

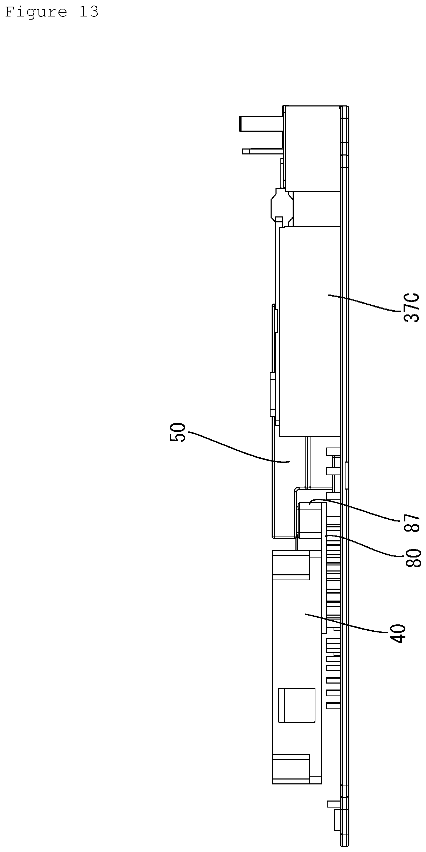

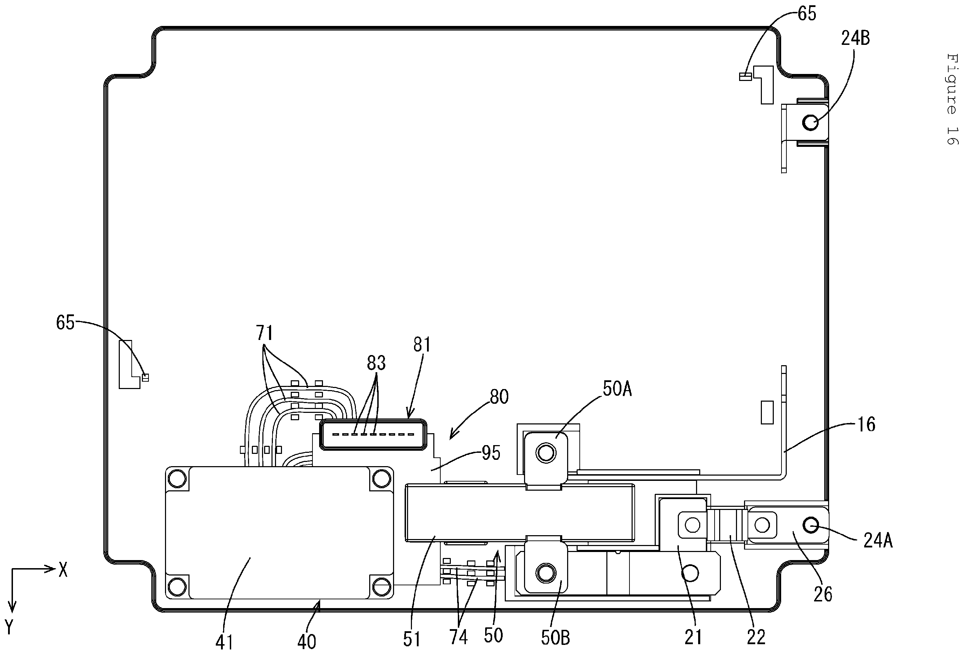

Embodiment 1 of the present invention will be described with reference to FIGS. 1 to 16. An electricity storage pack 10 according to this embodiment is to be mounted in a vehicle (not shown) such as an electric car or a hybrid car. The electricity storage pack 10 can be attached to a vehicle in any attitude. In the following description, the X direction shown in FIG. 2 indicates a "right side", the Y direction indicates a "front side", and the Z direction indicates an "upper side".

### Electricity storage pack 10

As shown in FIGS. 1 and 2, the electricity storage pack 10 includes an electricity storage module 12, a control unit 40, a relay unit 50, a base member 60, and a cover 11. The cover 11 is made of a synthetic resin or a metal, for example, and is formed in a box shape whose lower side is open.

### Electricity storage module 12

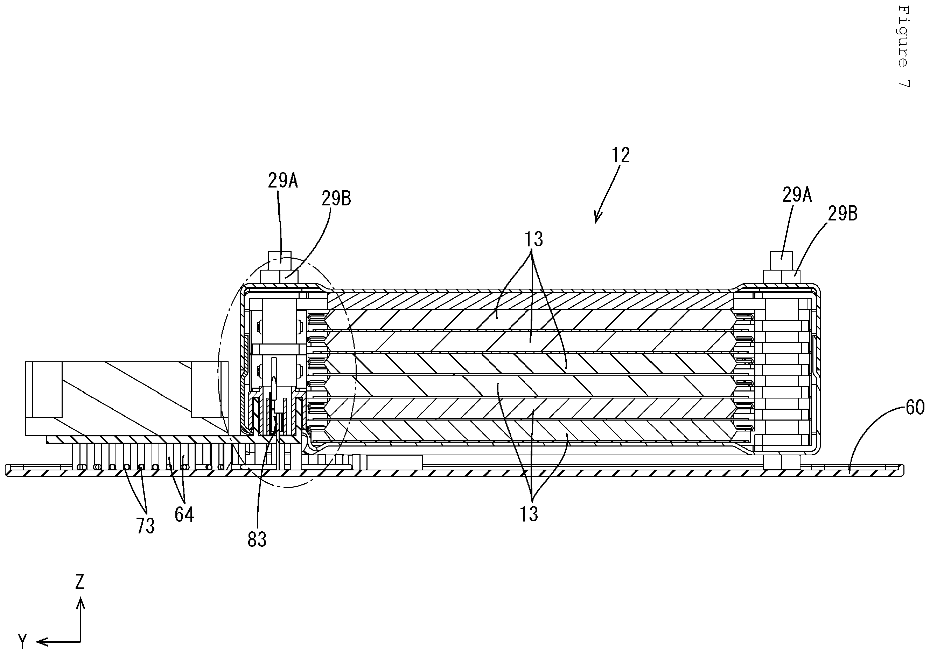

In the electricity storage module 12, a plurality of (six in this embodiment) electricity storage elements 13 are layered and accommodated in a module case 27 made of a metal. The electricity storage elements 13 have substantially a rectangular shape as viewed from above. As shown in FIG. 7, electricity storage constituents (not shown) are arranged between a pair of laminate sheets, and a positive electrode and a negative electrode are respectively formed on both ends. The electricity storage elements 13 are batteries, capacitors, or the like, for example. The vertically adjacent electricity storage elements 13 are arranged such that their polarities are opposite to each other, and therefore, the plurality of electricity storage elements 13 are connected in series as a whole. Each of the electricity storage elements 13 is held by a separator made of a synthetic resin.

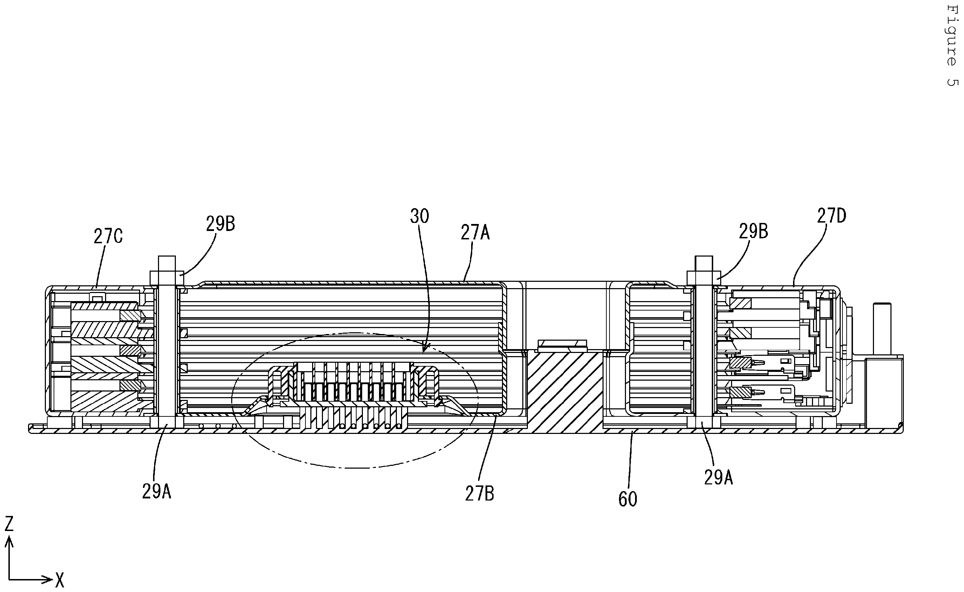

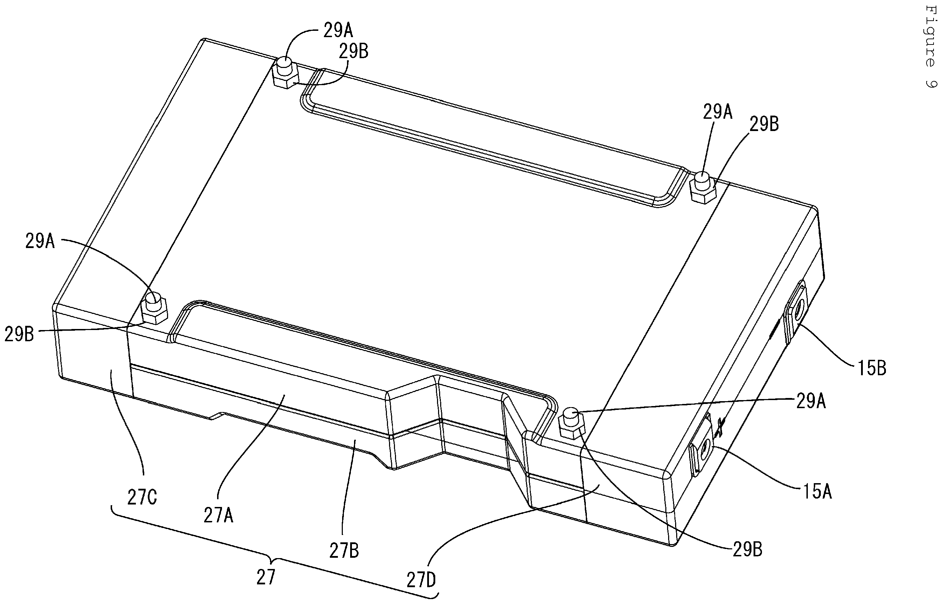

As shown in FIG. 9, the module case 27 is assembled from an upper case 27A, a lower case 27B, and lid bodies 27C and 27D and formed to cover the entirety of the plurality of electricity storage elements 13. The upper case 27A, the lower case 27B, and the lid bodies 27C and 27D are fixed to each other using bolts 29A and nuts 29B. In the electricity storage module 12, the heads of the bolts 29A are in contact with the top surface of the base member 60 (see FIG. 5), and thus the bottom surface of the electricity storage module 12 is arranged at a position that is a distance corresponding to the height of the heads of the bolts 29A higher than the top surface of the base member 60.

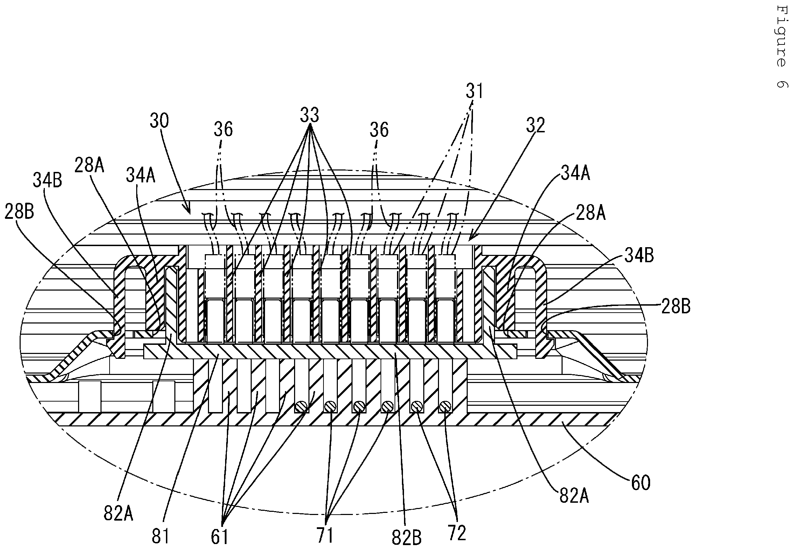

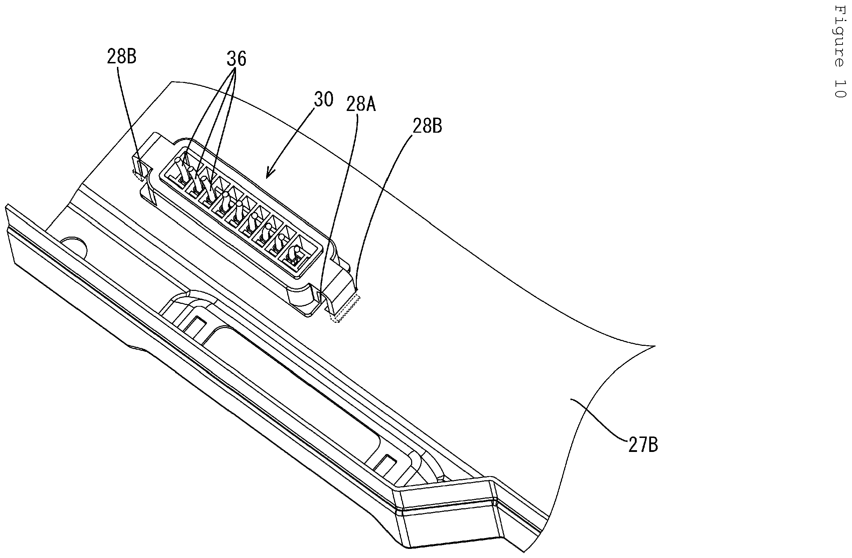

As shown in FIGS. 6 and 10, an opening 28A from which an electricity storage-side fitting portion 30 is to be exposed, and a locking hole 28B are formed through the lower case 27B. The electricity storage-side fitting portion 30 is fixed to the lower case 27B such that a first fitting portion 81 of a connector 80, which will be described later, can be fitted thereto from below, and includes a plurality of terminals 31 connected to the end portions of a plurality of voltage detection wires 36, and an accommodating portion 32 made of a synthetic resin that accommodates the plurality of terminals 31. The accommodating portion 32 includes a plurality of accommodating chambers 33 that hold the terminals 31 at predetermined positions. Front-stop protruding portions 34A that stop at the front of the lower case 27B and locking portions 34B that are locked to the lower case 27B are provided on both sides of the accommodating portion 32. Each of the locking portions 34B is provided with a locking claw at the front end, has a bendable and deformable thickness, and extends downward. The locking claw is locked to the hole edge of the locking hole 28B of the lower case 27B. The electricity storage-side fitting portion 30 is fixed to the lower case 27B with the front-stop protruding portions 34A and the locking portions 34B. The voltage detection wires 36 are electrically connected to the positive electrodes or the negative electrodes of the electricity storage elements 13, and output voltage signals of the electricity storage elements 13. The voltage detection wires 36 each are obtained by coating the outer circumference of a stranded wire formed by twisting a plurality of metal thin wires with an insulating resin.

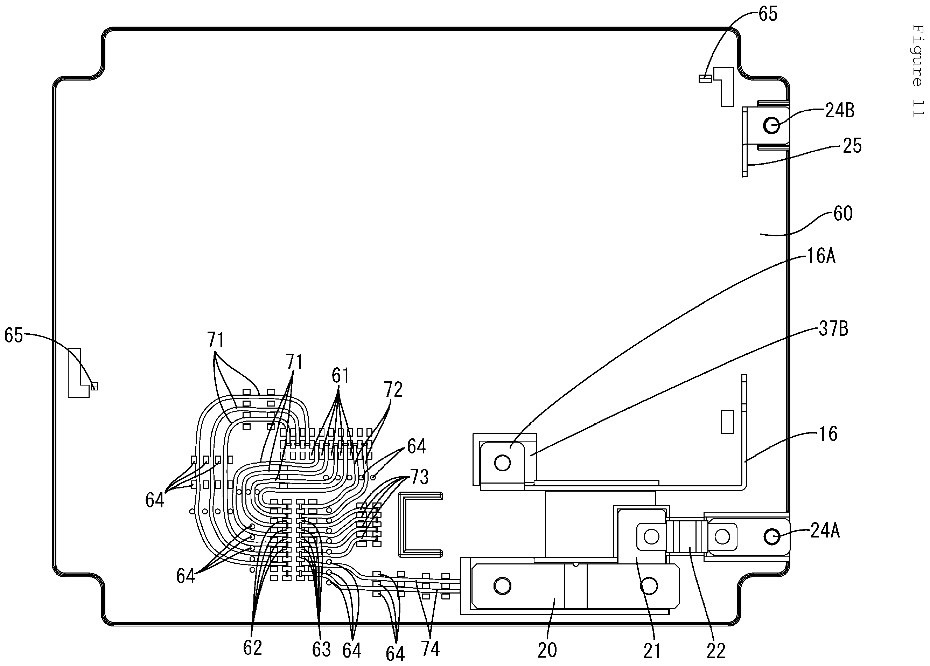

As shown in FIG. 2, terminals 15A and 15B that are positive and negative output terminals of the overall electricity storage module 12 are provided at the right end portion of the electricity storage module 12. A plate-shaped portion 25 of an external output terminal 24B that is connectable to the outside is laid flat on one terminal 15B. The external output terminal 24B is constituted by a stud bolt protruding from a metal plate material that is bent in an L shape, and is placed on a base portion 37A protruding from the base member 60. One end of a connecting bus bar 16 is laid flat on the other terminal 15A. The connecting bus bar 16 is obtained by stamping a metal plate material made of copper, a copper alloy, or the like into a predetermined shape, and is formed substantially in an L-shape as viewed from above. As shown in FIG. 11, the other end of the connecting bus bar 16 is bent in a right angle and formed into a connecting portion 16A, and is placed on a base portion 37B protruding upward from the top surface of the base member 60.

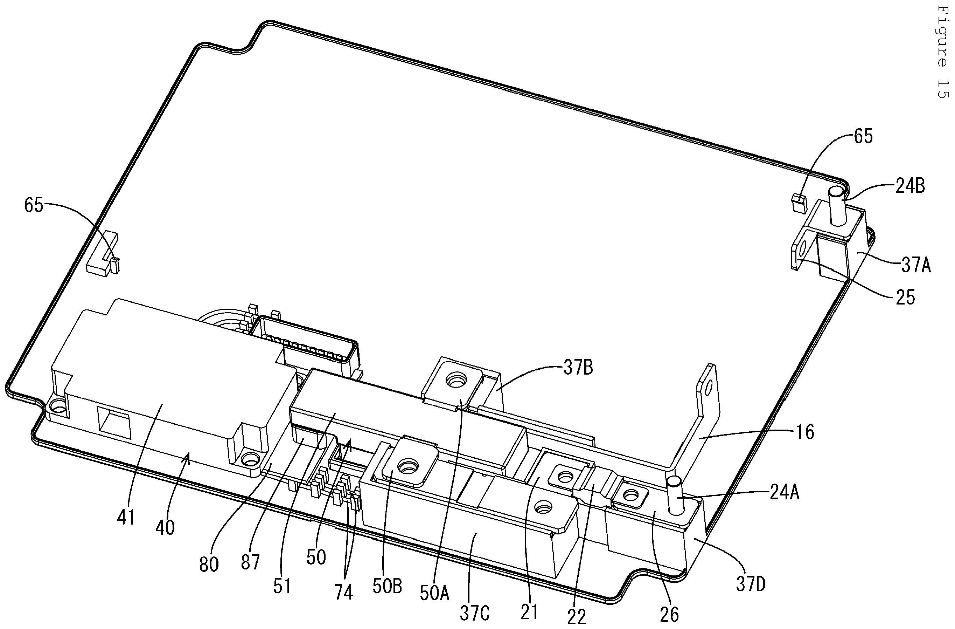

As shown in FIG. 15, one terminal 50A of the relay unit 50 is laid flat on the connecting portion 16A. An electric current detecting portion 20 is laid flat on the other terminal 50B of the relay unit 50, and the electric current detecting portion 20, a relay bus bar 21, and a fuse 22 are connected to the terminal 50B in series. The electric current detecting portion 20 outputs voltage signals in accordance with electric currents via electric wires 74, and in this embodiment, a shunt resistor is used for the electric current detecting portion 20. The electric current detecting portion 20 is placed on a base portion 37C protruding upward from the top surface of the base member 60.

One end of the relay bus bar 21 constituted by a metal plate material is connected to the right end portion of the electric current detecting portion 20. One end of the fuse 22 is connected to the other end of the relay bus bar 21. The other end of the fuse 22 is laid flat on a plate-shaped portion 26 of an external output terminal 24A and connected thereto. The external output terminal 24A includes a stud bolt that rises from the plate surface and is placed on a base portion 37D. The external output terminals 24A and 24B are to be connected to external loads or the like (not shown).

### Control unit 40

The control unit 40 is an electronic control unit (ECU) to be mounted in a vehicle, for example. The control unit 40 has a function of calculating voltages of the electricity storage elements 13 and electric currents from the terminals 15A and 15B based on the signals from the voltage detection wires 36 and the electric current detecting portion 20, for example.

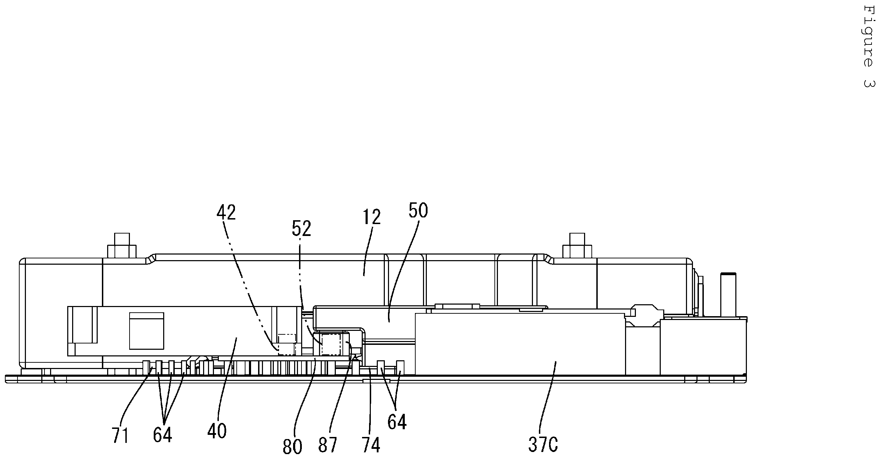

In the control unit 40, a circuit portion (not shown) is accommodated in a case 41, and a control-side fitting portion 42 that enables fitting from below is fixed to the bottom surface of the case 41 (see FIG. 3). The control-side fitting portion 42 is fitted to a second fitting portion 84 of the connector 80, which will be described later. The control-side fitting portion 42 has the same function as that of the above-mentioned electricity storage-side fitting portion 30 and differs from the electricity storage-side fitting portion 30 in the number of the terminals 31 and the shape of the accommodating portion 32, which depends on the number of the terminals 31. Thus, its further description is omitted. The control unit 40 is fixed to the top surface of the base member 60 using a fixing means such as a screw or the like.

### Relay unit 50

In the relay unit 50, a plurality of relays (not shown) are accommodated in a case 51. The relays include main relays and pre-charging relays. The relay unit 50 includes a pair of terminals 50A and 50B. One terminal 50A and the connecting bus bar 16 are fixed to the base portion 37B using a screw, and the other terminal 50B and the left end portion of the electric current detecting portion 20 are fixed to the base portion 37C using a screw. The relay unit 50 applies or interrupts an electric current between the connecting bus bar 16 and the electric current detecting portion 20 by turning the relays on or off. A relay-side fitting portion 52 that enables fitting from below is fixed to the bottom surface of the case 51 (see FIG. 3). The relay-side fitting portion 52 is fitted to a third fitting portion 87 of the connector 80. The relay-side fitting portion 52 differs from the electricity storage-side fitting portion 30 in the shape of the accommodating portion 32, which depends on the number of the terminals 31, and thus its further description is omitted.

### Base member 60

The base member 60 is made of an insulating synthetic resin and has a rectangular shape with a size that allows the electricity storage module 12, the control unit 40, and the relay unit 50 to be placed at different regions as shown in FIG. 11. A plurality of holding portions 61 to 64 protruding upward are formed on the top surface of the base member 60. The holding portions 61 to 63 include first holding portions 61, second holding portions 62, and third holding portions 63 that are provided in accordance with the positions of the fitting portions 30, 42, and 52, and are positioned by press-fitting the end portions of the connector terminals, which are provided with a pair of pressure-welding blades. The holding portions 64 hold the electric wires 71 to 74 in predetermined wiring routes by holding the electric wires 71 to 74 therebetween, and thus prevent positional shifts of the electric wires 71 to 74. Each of the electric wires 71 to 74 arranged on the top surface of the base member 60 has a configuration in which the outer circumference of a single metal core wire is covered with an insulating synthetic resin. The electric wires 71 to 74 are pressure-welded to the sides provided with a pair of pressure-welding blades in the terminals 31, which are pressure-welding terminals.

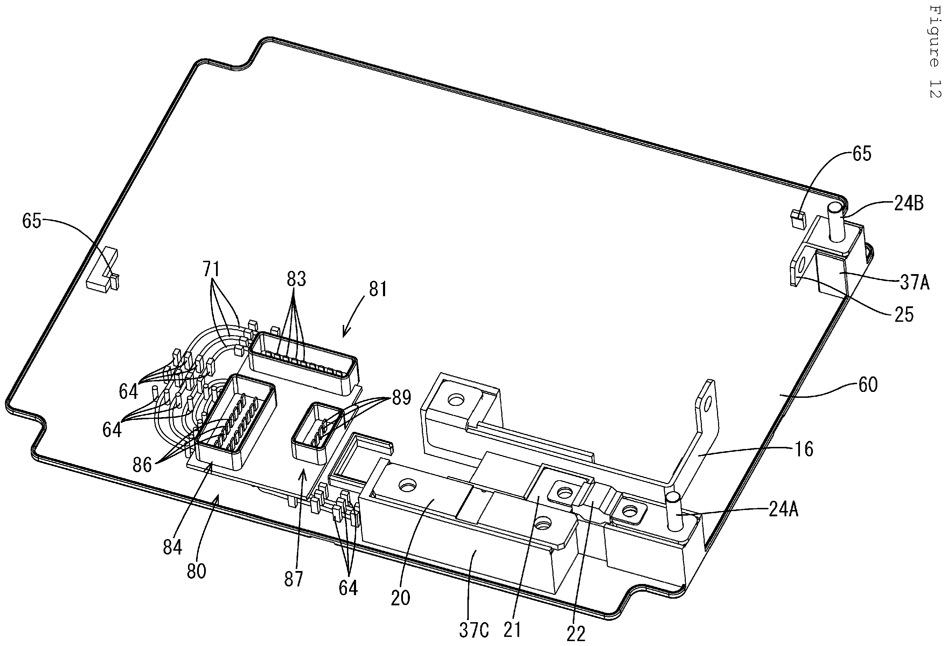

As shown in FIG. 12, two locking claws 65 that can be elastically deformed protrude upward from the top surface of the base member 60. The electricity storage module 12 is fixed to the base member 60 by engaging the locking claws 65 with lock-receiving portions (not shown) formed in the lower case 27B. The connector 80 is arranged on the base member 60.

### Connector 80

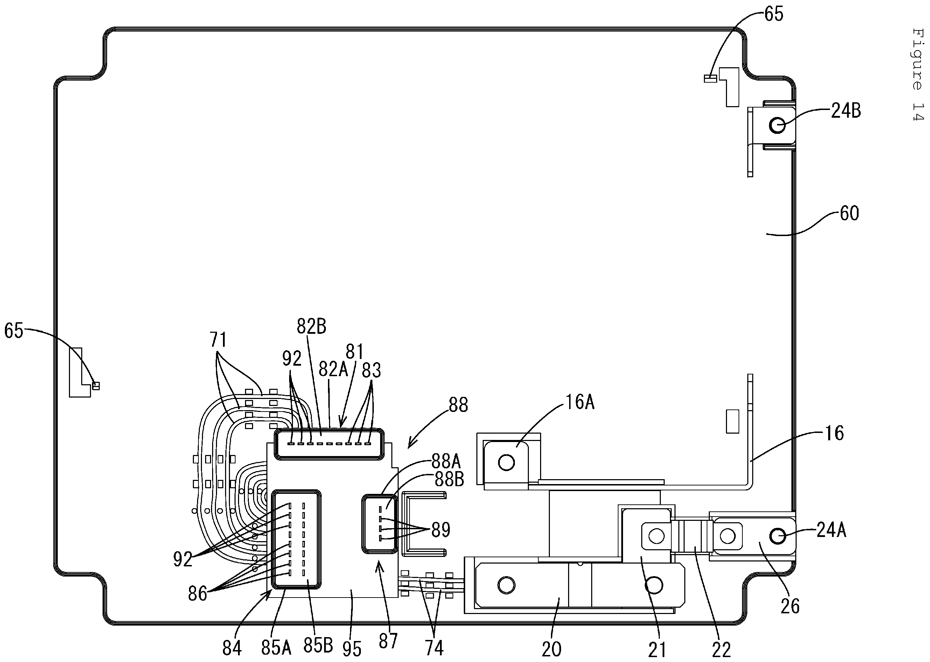

The connector 80 is a stand-by connector, and includes, as shown in FIG. 14, the first fitting portion 81 to be fitted to the electricity storage-side fitting portion 30, the second fitting portion 84 to be fitted to the control-side fitting portion 42, the third fitting portion 87 to be fitted to the relay-side fitting portion 52, and a coupling portion 95 to which the fitting portions 81, 84, and 87 are integrally coupled. The first fitting portion 81 includes a hood portion 82A that opens in a polygonal tube shape, an inner wall portion 82B that closes the inner side of the hood portion 82A, and first connector terminals 83 that pass through the inner wall portion 82B. The second fitting portion 84 includes a hood portion 85A that opens in a polygonal tube shape, an inner wall portion 85B that closes the inner side of the hood portion 85A, and second connector terminals 86 that pass through the inner wall portion 85B. The third fitting portion 87 includes a hood portion 88A that opens in a polygonal tube shape, an inner wall portion 88B that closes the inner side of the hood portion 88A, and third connector terminals 89 that pass through the inner wall portion 88B.

The coupling portion 95 is a plate material that is formed in a flange shape and has a constant thickness corresponding to the heights of the inner wall portions. Through holes 92 into which male tabs of the first connector terminals 83, the second connector terminals 86, and the third connector terminals 89 are inserted are formed in the inner wall portions 82B, 85B, and 88B of the first fitting portion 82, the second fitting portion 85, and the third fitting portion 88.

It is sufficient that the through holes 92 have a size that allows the first connector terminals 83, the second connector terminals 86 and the third connector terminals 89 to be inserted thereinto, but the through holes 92 may also be formed in a size that allows the first connector terminals 83, the second connector terminals 86, and the third connector terminals 89 to be press-fitted. The bottom surface of the connector 80 is placed on the holding portions 61 to 64, and therefore, the connector 80 is fixed at a position that is higher by the heights of the holding portions 61 to 64 than the base member 60. The connector 80 is fixed to the base member 60 using a fixing means such as screwing (not shown) into the base member 60 or a locking mechanism, but there is no limitation thereto. For example, the connector 80 may also be fixed via the connector terminals 83, 86, and 89.

The assembly of the electricity storage pack 10 will be described next.

The electric wires 71 to 74 are arranged on the base member 60, and the external output terminals 24A and 24B, the connecting bus bar 16, the electric current detecting portion 20, the relay bus bar 21, and the fuse 22 are attached to predetermined positions (FIG. 11).

Next, the connector 80 to which the first connector terminals 83, the second connector terminals 86, and the third connector terminals 89 have been attached is attached to the base member 60 (FIG. 12). It should be noted that the connector 80 may also be attached after the first connector terminals 83, the second connector terminals 86, and the third connector terminals 89 are press-fitted to the electric wires 71 to 74 on the base member 60.

Next, the control unit 40 and the relay unit 50 are fixed to the base member 60 by fitting the second fitting portion 84 and the third fitting portion 87 to the control-side fitting portion 42 and the relay-side fitting portion 52 of the connector 80, respectively (FIG. 15). Moreover, the electricity storage module 12 is fixed to the base member 60 by fitting the first fitting portion 81 to the electricity storage-side fitting portion 30 of the connector 80 (FIG. 2). The electricity storage pack 10 is formed by assembling the cover 11 to the heads of the electricity storage module 12 and the base member 60 from above (FIG. 1).

With this embodiment, the following operational effects are attained.

With this embodiment, regarding the electrical connection between the electricity storage module 12 and the control unit 40, the first fitting portion 81 of the connector 80 fixed to the base member 60 and the second fitting portion 84 thereof are connected via the electric wires 71 (conductive paths), and therefore, the electricity storage module 12 and the control unit 40 can be electrically connected by fitting the electricity storage-side fitting portion 30 to the first fitting portion 81 and fitting the control-side fitting portion 42 to the second fitting portion 84. This makes it possible to arrange the electricity storage-side fitting portion 30 and the control-side fitting portion 42 collectively at the position on the connector 80 side, and therefore, the wiring routes of the conductive paths between the electricity storage module 12 and the control unit 40 can be shortened compared with a case where the electricity storage module 12 and the control unit 40 are connected without using the connector 80, thus making it possible to simplify the configuration of the electricity storage pack 10.

The conductive path is an electric wire arranged on the base member 60.

With this configuration, the degree of freedom of the conductive path route can be increased.

The base member 60 includes holding portions 61 to 64 for holding the electric wires 71 to 74.

With this configuration, the positional shifts of the electric wires 71 to 74 can be suppressed.

The electricity storage pack 10 further includes the electric current detecting portion 20 that outputs a signal in accordance with an electric current outputted by the electricity storage module 12, wherein the conductive path connects the electric current detecting portion 20 and the terminal of the second fitting portion 84.

With this configuration, the control unit 40 can detect an electric current outputted from the electricity storage module 12.

The electricity storage pack 10 further includes the relay unit 50 that includes a relay for turning outputs of the electricity storage module 12 on or off, wherein the connector 80 includes the third fitting portion 87 having the third connector terminal 89 (terminal) that is electrically connected to at least one of the terminal of the first fitting portion 81 and the terminal of the second fitting portion 84, and the relay unit 50 includes the relay-side fitting portion 52 fitted to the third fitting portion 87.

With this configuration, the electricity storage-side fitting portion 30, the control-side fitting portion 42, and the relay-side fitting portion 52 can be gathered at the position on the connector 80 side, thus making it possible to simplify the configuration of the electricity storage pack 10.

### Other Embodiments

The present invention is not limited to the embodiment that has been described above with reference to the drawings, and embodiments such as those described below are also included in the technical scope of the present invention, for example.
(1) Although the electric wires 71 to 74 are used as the conductive paths for connecting the connector terminals and the like, there is no limitation thereto. For example, a conductive path may be formed using a bus bar obtained by forming a metal plate into the shape of the conductive path, a copper foil pattern, or the like. Moreover, the conductive path is not limited to that arranged on the base member 60. For example, the conductive path may be fixed to the connector 80.
(2) Although the holding portions 61 to 64 have a shape protruding from the top surface of the base member 60, there is no limitation thereto. For example, holding portions having a groove shape may be formed on the top surface of the base member 60.
(3) Although the connector 80 and the base member 60 are formed separately, the housing of the connector 80 and the base member 60 may be formed integrally

### List of Reference Numerals

10: Electricity storage pack
12: Electricity storage module
13: Electricity storage element
20: Electric current detecting portion
30: Electricity storage-side fitting portion
31: Terminal
40: Control unit
42: Control-side fitting portion
50: Relay unit
52: Relay-side fitting portion
60: Base member
61 to 64: Holding portion
71 to 74: Electric wire (conductive path)
80: Connector
81: First fitting portion
83: First connector terminal (terminal)
84: Second fitting portion
86: Second connector terminal (terminal)
87: Third fitting portion
89: Third connector terminal (terminal)

## Claims

1. An electricity storage pack comprising:
a base member;
a connector that is fixed to the base member and includes a first fitting portion and a second fitting portion;
a conductive path that electrically connects a terminal of the first fitting portion and a terminal of the second fitting portion;
an electricity storage module that includes an electricity storage-side fitting portion fitted to the first fitting portion; and
a control unit that includes a control-side fitting portion fitted to the second fitting portion.

2. The electricity storage pack according to claim 1, wherein the conductive path is an electric wire arranged on the base member.

3. The electricity storage pack according to claim 2, wherein the base member includes a holding portion for holding the electric wire.

4. The electricity storage pack according to any one of claims 1 to 3, further comprising:
an electric current detecting portion that outputs a signal in accordance with an electric current outputted by the electricity storage module,
wherein the conductive path connects the electric current detecting portion and the terminal of the second fitting portion.

5. The electricity storage pack according to any one of claims 1 to 4, further comprising
a relay unit that includes a relay for turning outputs of the electricity storage module on or off,
wherein the connector includes a third fitting portion having a terminal that is electrically connected to at least one of the terminal of the first fitting portion and the terminal of the second fitting portion, and
the relay unit includes a relay-side fitting portion fitted to the third fitting portion.
